# EUROPÄISCHE PATENTSCHRIFT

(11) **EP 3 929 886 B1**
(45) Veröffentlichungstag und Bekanntmachung des Hinweises auf die Patenterteilung: **15.02.2023**
(21) Anmeldenummer: 20182640.1
(22) Anmeldetag: 26.06.2020
(51) Int. Cl.: G07C 9/37, E05F 1/00, G05B 15/02, G07C 9/38, G10L 17/26

(54) **VERFAHREN FÜR DIE GEBÄUDEAUTOMATION UNTER ANWENDUNG VON GEBÄUDESTATUSINFORMATION SOWIE EIN ENTSPRECHENDES GEBÄUDE**
METHOD FOR BUILDING AUTOMATION USING BUILDING STATUS INFORMATION AND A CORRESPONDING BUILDING
PROCÉDÉ DESTINÉ À L'AUTOMATISATION DE BÂTIMENT À L'AIDE DES INFORMATIONS D'ÉTAT DU BÂTIMENT AINSI QUE BÂTIMENT CORRESPONDANT

(43) Veröffentlichungstag der Anmeldung: 29.12.2021
(73) Patentinhaber: GIRA GIERSIEPEN GmbH & Co. KG, 42477 Radevormwald (DE)
(72) Erfinder: Feltgen, Christian, 41542 Dormagen (DE)
(74) Vertreter: Angerhausen, Christoph

(56) Entgegenhaltungen:
- EP-A1- 3 401 884
- CN-A- 106 557 036
- DE-A1-102013 223 265
- DE-A1-102015 205 251
- US-A1- 2017 075 510
- US-A1- 2018 330 589

## Beschreibung

Die Erfindung betrifft ein Verfahren für die Gebäudeautomation, bei dem ein akustisches Signal in einem Raum eines Gebäudes, das ein Gebäudeautomationssystem aufweist, erfasst wird.

Die DE 10 2015 205 251 A1 beschreibt ein System zur Erfassung eines akustischen Signals, das Detektieren eines Geräuschs in dem erfassten akustischen Signal und das Vergleichen des detektierten Geräuschs mit gespeicherten Geräuschen, wobei jedem gespeicherten Geräusch ein Steuerbefehl zugeordnet ist. Es wird weiterhin das Ausgeben des dem selektierten Geräusch zugeordneten Steuerbefehls beschrieben.

Die EP 2 816 554 A2 beschreibt ein Verfahren zur Identifizierung von Personen über Sprachbefehle sowie eine Sprachsteuerung und ein entsprechendes Gerät, welches dazu eingerichtet ist, die Stimme eines Anwenders zu empfangen. Empfangene Sprachbefehle können anschließend gefiltert und hinsichtlich charakteristischer Attribute und Eigenschaften analysiert werden. Ein Prozessor ist dazu vorgesehen, die Attribute mit abgespeicherten Attributen zu vergleichen und damit einen Anwender zu identifizieren.

Die US 2018/0293981 A1 offenbart ein weiteres Verfahren zur Identifizierung eines Anwenders anhand dessen Stimme sowie eine Spracherkennung. Die Benutzeridentifizierung kann mittels Korrelation mit hinterlegten Sprachfingerabdrücken und durch die Berechnung eines Übereinstimmungsgrades erfolgen.

Ähnliche Verfahren sind auch in der US 2017/075510 A1, der EP 3 401 884 A1, der US 2018/330589 A1, der US 2017/0351387 A1 und in der US 2007/0136058 A1 beschrieben.

Zur Optimierung der Ansteuerung eines Gebäudeautomationssystems wird häufig sogenannte Gebäudestatusinformation verwendet. Die Gebäudestatusinformation kann beispielsweise die Stellposition (offen/geschlossen) eines Fensters oder einer Tür des Gebäudes betreffen. Diese Information kann beispielsweise dazu verwendet werden, einen Heizungsaktor anzusteuern, ein Heizungsventil zu schließen, obwohl beispielsweise ein Raumthermostat eine Raumtemperatur misst, die unterhalb einer Solltemperatur liegt und damit zu einer Öffnung des Heizungsventils führen würde.

Für die Erfassung der Raumstatusinformation ist entsprechende Sensorik erforderlich, beispielsweise im Falle der Bestimmung des Öffnungszustands eines Fensters oder einer Tür kann ein entsprechender Tür- oder Fensterkontaktschalter verwendet werden. Diese Sensorik muss über einen geeigneten Busankoppler mit dem Gebäudeautomationssystem verbunden werden, um die Gebäudestatusinformation zu übertragen. Bei einer Vielzahl von Fenstern, die ein Gebäude üblicherweise aufweist, ist eine entsprechende Vielzahl derartiger Sensoren erforderlich, da in dem genannten Beispiel schon ein geöffnetes Fenster oder eine geöffnete Tür zum Zwecke der Energieeinsparung erkannt werden muss.

Es ist daher die Aufgabe der Erfindung, ein Verfahren für die Gebäudeautomation zur Verfügung zu stellen, welches mit einfachen technischen Mitteln die Erfassung der Gebäudestatusinformation erlaubt und dementsprechend kostengünstig umgesetzt werden kann.

Diese Aufgabe wird durch ein Verfahren mit den Merkmalen des Anspruchs 1 gelöst. Der nebengeordnete Anspruch 9 betrifft ein entsprechendes Gebäude. Vorteilhafte Ausführungsformen der Erfindung sind Gegenstand der abhängigen Ansprüche.

Demgemäß ist bei einem Verfahren für die Gebäudeautomation vorgesehen, dass dieses die Schritte aufweist:
- Erfassen eines akustischen Signals in einem Raum eines Gebäudes, das ein Gebäudeautomationssystem aufweist;
- Abgleichen des erfassten akustischen Signals mit mindestens einem akustischen Referenzsignal, dem eine Gebäudestatusinformation zugeordnet ist;
- Anwenden der Gebäudestatusinformation bei der Erzeugung eines Steuerbefehls zur Ansteuerung eines Sensors oder eines Aktors des Gebäudeautomationssystems, wenn bei dem Abgleichen eine Übereinstimmung zwischen dem erfassten akustischen Signals und dem der Gebäudestatusinformation zugeordneten akustischen Referenzsignal erkannt worden ist, wobei das Erfassen eines akustischen Signals das Erfassen eines Umgebungsgeräuschs aufweist, das ein charakteristisches Verkehrsgeräusch oder Naturgeräusch ist, welches von einer

Geräuschquelle außerhalb des Gebäudes erzeugt wird, wobei infolge des Erfassens des Umgebungsgeräuschs aus der Gebäudestatusinformation, die dem Referenzsignal zugeordnet ist, das mit dem erfassten akustischen Signal übereinstimmt, auf ein geöffnetes Fenster oder eine geöffnete Tür des Raums geschlossen wird,
wobei der Aktor ein Heizungsaktor ist, welcher bei Feststellung eines geöffneten Fensters oder einer geöffneten Tür derart angesteuert wird, dass der Heizungsaktor ein dem Raum zugeordnetes Heizungsventil schließt oder geschlossen hält.

Es wird somit ein Verfahren vorgeschlagen, bei dem die Gebäudestatusinformation anhand von akustisch messbaren Signalen erfasst wird. So wird der Öffnungszustand einer Tür oder eines Fensters über eine in einen betreffenden Raum eintretende Geräuschkulisse erfasst, die erkennbar einer akustischen Quelle entspringt, die außerhalb des Gebäudes liegt. Ein geöffnetes Fenster führt dazu, dass Umgebungsgeräusche aus der Umwelt des Gebäudes in den Raum eintreten. Dies sind charakteristische Verkehrsgeräusche oder Naturgeräusche, die durch Abgleich mit Referenzgeräuschen ausreichend präzise erfasst werden können. Um Energieverschwendung zu vermeiden, führt die Berücksichtigung der Gebäudestatusinformation dazu, dass der Heizungsaktor angesteuert wird, das Ventil zu schließen bzw. geschlossen zu halten, obwohl die Raumtemperatur gegebenenfalls unterhalb der Zimmertemperatur liegt.

Beispielsweise kann über einen Anstieg der Signalamplitude des akustischen Signals der Öffnungszustand eines Fensters oder einer Tür oder einer sonstigen Öffnung in dem Gebäude erfasst werden. Für die Erfassung der akustischen Signale ist lediglich ein akustischer Sensor, etwa ein Mikrofon erforderlich, welcher bei modernen Gebäudeautomationssystemen bauseits ohnehin vorgesehen sein kann, etwa für die Sprachsteuerung. Ein einziges Mikrofon kann insbesondere bei einem Raum, der beispielsweise eine Vielzahl Öffnungen in Form von Fenstern und Türen aufweist, eine entsprechende Vielzahl der aus dem Stand der Technik bekannten Kontaktschalter und vergleichbare Sensorik ersetzen, sodass sowohl hinsichtlich der Bauteilkosten als auch was die Installationsarbeiten anbelangt ein geringerer Aufwand realisiert werden kann, insbesondere bei drahtgebundenen Systemen, wo beispielsweise jeder einzelne Türkontaktschalter und dergleichen mit einer Busleitung verbunden werden muss.

Die akustischen Referenzsignale können beispielsweise in einer Datenbank des Gebäudeautomationssystems hinterlegt sein, beispielsweise auf einem lokalen Server des Gebäudeautomationssystems oder auf einem externen Server, beispielsweise einem in einer Cloud realisierten Server.

Das akustische Signal kann von außerhalb des Raums durch eine Öffnung in dem Raum, beispielsweise durch eine Fensteröffnung oder eine Türöffnung, in den Raum eintreten.

Das Erfassen eines akustischen Signals kann das Erfassen einer Signalamplitude des akustischen Signals aufweisen, wobei das Abgleichen nur dann durchgeführt wird, wenn die erfasste Signalamplitude eine Schwellamplitude oder einen Mindestgradienten übersteigt, oder wenn eine ansteigende Flanke der Signalamplitude eine Mindeststeigung aufweist. Damit kann beispielsweise nach Art einer Hysterese vermieden werden, dass geringfügige Schwankungen der Umgebungsgeräusche und sonstiger Hintergrundgeräusche zu einer übermäßigen Regelung des Gebäudeautomationssystems führen. Ebenso kann die für das Abgleichen der akustischen Signale mit den Referenzsignalen erforderliche Rechenkapazität minimiert werden.

Das Verfahren kann das Anlernen der akustischen Referenzsignale aufweisen, wozu der akustische Sensor beispielsweise eine vorgegebene Zeit "mithört" und gegebenenfalls von einem Benutzer über eine Eingabe manuell Zuordnungen zwischen akustischen Signalen, die akustische Referenzsignale sein sollen, und diesen zugeordneten Gebäudestatusinformationen hergestellt werden. Eine künstliche Intelligenz kann dazu verwendet werden, aus einer Geräuschkulisse charakteristische und als akustisches Referenzsignal taugliche Signale herauszufiltern, beispielsweise durch Herausfiltern eines Hintergrundrauschen und/oder durch Bestimmen eines Geräuschquellenabstands zum akustischen Sensor, woraus geschlossen werden kann, ob sich eine Geräuschquelle innerhalb des Raums oder außerhalb des Raums befindet und demgemäß, ob es sich um ein Umgebungsgeräuschs oder um ein höchstwahrscheinlich von Personen im Raum erzeugtes Geräusch handelt. Wenn der akustische Sensor nach Art eines Richtmikrofons ausgebildet ist, kann die Ortsinformation über die Geräuschquelle und damit die Zuordnung zu akustischen Referenzsignalen noch weiter präzisiert werden.

Das akustische Signal kann von einem akustischen Sensor, beispielsweise von einem Mikrofon, erfasst werden, der sich innerhalb des Raums befindet, wobei der akustische Sensor vorzugsweise an der Decke des Raums oder an einer Wand des Raums angeordnet ist.

Das erfasste akustische Signal kann für das Abgleichen über ein IP-Protokoll an einen zentralen Server des Gebäudeautomationssystems oder an einen externen Server, der außerhalb des Gebäudes angeordnet ist, übertragen werden, wobei das Abgleichen auf dem Server durchgeführt wird. Dabei kann vorzugsweise das Erzeugen des Steuerbefehls auf demselben Server durchgeführt werden, wobei der Steuerbefehl, wenn er auf einem externen Server erzeugt wird, vorzugsweise über dasselbe IP-Protokoll an das Gebäude übertragen wird. Wenn für die Auswertung des akustischen Signals eine hohe Rechenleistung erforderlich ist, welche der Server des Gebäudeautomationssystems gegebenenfalls nicht aufweist, hat der externe Server gegenüber dem lokalen Server Vorteile.

Das Verfahren kann weiterhin das Ansteuern eines Fensteraktors aufweisen, wenn die erfasste Signalamplitude des akustischen Signals eine Schwellamplitude übersteigt, sodass ein von dem Fensteraktor angetriebenes Fenster von einer Offenstellung in eine Schließstellung überführt wird. Auf diese Weise kann erreicht werden, dass bei dem Übersteigen einer gegebenenfalls einstellbaren Schwelllautstärke des akustischen Signals, welches beispielsweise ein über das Fenster eintretendes Umgebungsgeräuschs, etwa Verkehrslärm, ist, durch Ansteuerung des Fensteraktors das Fenster geschlossen und damit die in den Raum eintretende akustische Belastung minimiert wird.

Das Verfahren kann das Ansteuern eines Heizungsaktors abhängig von der erfassten und vorzugsweise gemittelten Signalamplitude aufweisen, wobei von dem Heizungsaktor eine Heizleistung eines in dem Raum angeordneten Heizradiators bei einer ansteigenden Signalamplitude verringert und bei einer abfallenden Signalamplitude erhöht wird. Über den Anstieg der Signalamplitude kann beispielsweise bestimmt werden, dass eine Öffnung des Raums zur Umgebung des Gebäudes, beispielsweise eine Fensteröffnung oder eine Türöffnung, (weiter) geöffnet worden ist, sodass zur Verringerung des Heizenergieverbrauchs aufgrund der über die Öffnungen verlustigen Wärme die Heizleistung heruntergeregelt werden kann.

Das Erfassen eines akustischen Signals kann das Erfassen eines Störsignals mit einem unspezifischen Frequenzspektrum aufweisen, zu dem kein übereinstimmendes Referenzsignal für das Abgleichen existiert, wobei bei dem Überschreiten einer Schwellamplitude des Störsignals ein Tür- oder Fensteraktor des Gebäudeautomationssystems dazu angesteuert wird, mindestens eine Tür und/oder mindestens ein Fenster des Gebäudeautomationssystems zu schließen.

Nach dem Schließen kann verifiziert werden, ob eine Signalamplitude des Störsignals die Schwellamplitude unterschreitet oder zumindest geringer als vor dem Schließen geworden ist, wobei
a. in dem Fall, dass die Signalamplitude des Störsignals die Schwellamplitude unterschreitet, keine weitere Ansteuerung des Tür- oder Fensteraktors erfolgt und das mindestens eine Fenster oder die mindestens eine Tür geschlossen gehalten wird;
b. in dem Fall, dass die Signalamplitude des Störsignals die Schwellamplitude nicht unterschreitet, jedoch geringer geworden ist, mindestens ein weiterer Tür- oder Fensteraktor des Gebäudeautomationssystems dazu angesteuert wird, sukzessive mindestens eine weitere Tür und/oder mindestens ein weiteres Fenster des Gebäudeautomationssystems zu schließen, bis die Signalamplitude des Störsignals die Schwellamplitude unterschreitet;
c. in dem Fall, dass die Signalamplitude des Störsignals nach dem Schließen nicht oder nicht wesentlich geringer als vor dem Schließen ist, der für das Schließen angesteuerte Aktor angesteuert wird, die mindestens eine Tür und/oder das mindestens eine Fenster des Gebäudeautomationssystems wieder zu öffnen.

Gemäß einem anderen Aspekt der Erfindung wird ein Gebäude mit mindestens einem Raum und einem Gebäudeautomationssystem beschrieben, das einen akustischen Sensor in dem Raum, etwa ein Mikrofon, und eine Vielzahl Aktoren und/oder Sensoren in dem Raum aufweist, die über ein Gebäudenetzwerk kommunikativ miteinander verbunden sind, wobei der akustische Sensor dazu eingerichtet ist, ein akustisches Signal in dem Raum zu erfassen, wobei das Gebäudeautomationssystem dazu eingerichtet ist, das akustische Signal mit mindestens einem akustischen Referenzsignal abzugleichen, dem eine Gebäudestatusinformation zugeordnet ist, und wobei das Gebäudeautomationssystem weiterhin dazu eingerichtet ist, die Gebäudestatusinformation bei der Erzeugung eines Steuerbefehls zur Ansteuerung eines Sensors oder eines Aktors des Gebäudeautomationssystems anzuwenden, wenn eine Übereinstimmung zwischen dem erfassten akustischen Signal und dem der Gebäudestatusinformation zugeordneten akustischen Referenzsignal vorliegt, wobei das Erfassen eines akustischen Signals das Erfassen eines Umgebungsgeräuschs aufweist, das ein charakteristisches Verkehrsgeräusch oder Naturgeräusch ist, welches von einer Geräuschquelle außerhalb des Gebäudes erzeugt wird, wobei das Gebäudeautomationssystem dazu eingerichtet ist, infolge des Erfassens des Umgebungsgeräuschs aus der Gebäudestatusinformation, die dem Referenzsignal zugeordnet ist, das mit dem erfassten akustischen Signal übereinstimmt, auf ein geöffnetes Fenster oder eine geöffnete Tür des Raums zu schließen,
wobei der Aktor ein Heizungsaktor ist, welcher bei Feststellung eines geöffneten Fensters oder einer geöffneten Tür derart angesteuert ist, dass durch den Heizungsaktor das Schließen eines dem Raum zugeordneten Heizungsventil oder das Verbleiben in einer Schließposition bewirkt ist.

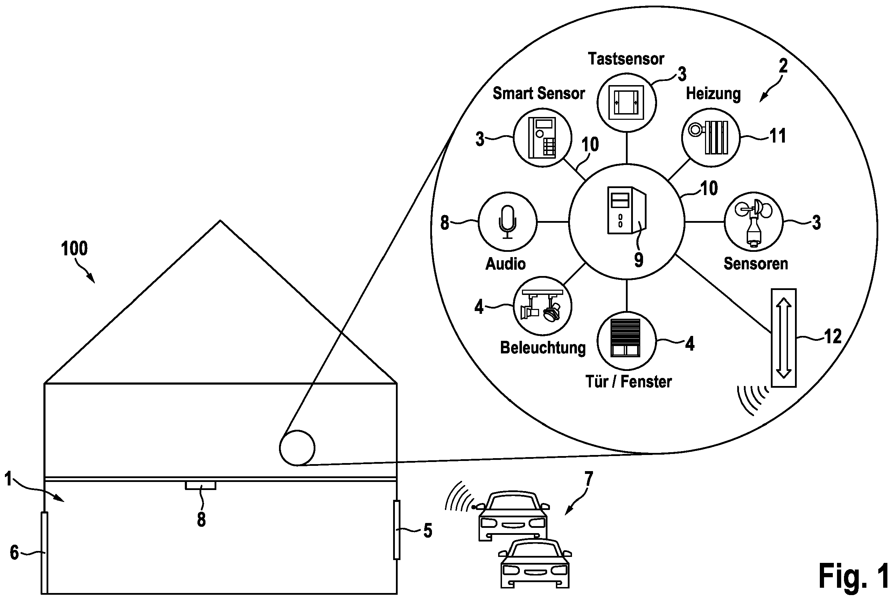

Weitere Einzelheiten der Erfindung werden anhand der nachstehenden Figur 1 erläutert. Diese zeigt ein Gebäude 100, in dem ein Gebäudeautomationssystem 2 ausgebildet ist. Das Gebäudeautomationssystem 2 weist verschiedene Sensoren 3, 8 und Aktoren 4 auf. Der für die Erfindung wesentliche akustische Sensor 8 ist ebenso wie die übrigen Sensoren 3 und Aktoren 4 über ein Gebäudenetzwerk 10 mit einem zentralen Server 9 verbunden. Das Gebäudenetzwerk 10 kann beispielsweise nach dem KNX-Standard ausgebildet sein. Für die drahtlose Busankopplung ist ein Busankoppler 12 vorgesehen.

Der akustische Sensor 8 kann für das Erfassen eines akustischen Signals in dem Raum 1 des Gebäudes 100 beispielsweise unter der Decke eines Raumes 1 positioniert sein. Der akustische Sensor 8 kann jedoch beispielsweise auch wandhängend oder an der Wand in einer UP-Dose untergebracht sein.

Erfindungsgemäß soll Gebäudestatusinformation aus den akustischen Signalen, welche mithilfe des akustischen Sensors 8 erfasst werden, abgeleitet werden. Dazu sind auf dem Server 9 oder auf einem externen Server, der beispielsweise über eine IP-Verbindung cloud-basiert ausgebildet sein kann, akustische Referenzsignale bereitgestellt, mit denen das erfasste akustische Signal abgeglichen werden soll. Dem akustischen Referenzsignal ist Gebäudestatusinformation zugeordnet, sodass bei einer erkannten Übereinstimmung zwischen dem mit dem akustischen Sensor 8 erfassten akustischen Signal und dem akustischen Referenzsignal die Gebäudestatusinformation für die Gebäudeautomation bereitgestellt werden kann. Diese Gebäudestatusinformation kann dann bei dem Erzeugen eines Steuerbefehls zur Ansteuerung eines Sensors und/oder eines Aktors 4 des Gebäudeautomationssystems 2 berücksichtigt werden.

Dazu kann auf dem Server 9 eine Datenbank mit akustischen Referenzsignalen hinterlegt sein, denen jeweils mindestens eine Gebäudestatusinformation zugeordnet ist. Beispielsweise kann ein akustisches Referenzsignal ein Verkehrsgeräusch sein. Diesem Referenzsignal kann die Gebäudestatusinformation "mindestens ein Fenster oder mindestens eine Tür des Raumes ist geöffnet" zugeordnet sein. Diese Gebäudestatusinformation kann dazu verwendet werden, um einen Heizungsaktor anzusteuern, die Heizleistung zu verringern, mithin ein Heizkörperventil zu schließen.

Anstelle eines für ein Verkehrsgeräusch typischen Frequenzspektrums kann das Verkehrsgeräusch auch über eine charakteristisch variierende Signalamplitude erkannt werden, wie sie typisch für vorbeifahrenden Kraftfahrzeugverkehr ist. Die Datenbank mit den Referenzsignalen kann herstellerseitig bereitgestellt sein oder von einem jeweiligen Endbenutzer, welcher das Gebäudeautomationssystem in Betrieb nimmt, anhand der bei ihm lokal vorgefundenen akustischen Umgebung individuell aufgenommen bzw. angelernt werden.

Die Erstellung der Datenbank mit akustischen Referenzsignalen kann auch die Kalibrierung der Referenzsignale unter Berücksichtigung eines Grundrauschens umfassen, welches von Anwendungsfall zu Anwendungsfall individuell sein kann, beispielsweise aufgrund der jeweils vorliegenden baulichen Gegebenheiten des Gebäudes 100 (Schalldämmung der Fenster, Deckenhöhe, Möblierung, etc.) bzw. der Umgebung des Gebäudes 100 (nahe einer Schnellstraße, hohes Verkehrsaufkommen, niedriges Verkehrsaufkommen, Lage nahe eines öffentlichen Platzes mit hohem Personenaufkommen, etc.).

Die in der Figur 1 dargestellte Ausführungsform zeigt insbesondere den Fall, dass ein über ein gegebenenfalls teilweise oder vollständig geöffnetes Fenster 5 oder eine Tür 6 in den Raum 1 eintretendes Umgebungsgeräusch 7, beispielsweise Verkehrslärm, mithilfe des akustischen Sensors an der Decke erfasst werden kann, um den Öffnungszustand des Fensters 5 oder der Tür 6, der in diesem Falle die Gebäudestatusinformation darstellt, zu erfassen und bei der Erzeugung des Steuersignals zur Ansteuerung des Gebäudeautomationssystems zu berücksichtigen. Dabei kann der akustische Sensor beispielsweise nach Art eines Richtmikrofons ausgebildet sein, sodass bei einem erfassten akustischen Signal über die Richtungsinformation des Signals zwischen verschiedenen möglichen Eintrittsorten des Umgebungsgeräuschs 7 und damit zwischen verschiedenen Fenstern 5 und der Tür 6 in dem Raum als Eintritt für das Umgebungsgeräuschs 7 unterschieden werden kann. Grundsätzlich ist diese Ausgestaltung jedoch optional, da es für gängige Anwendungsfälle der Gebäudeautomation unerheblich ist, wenn die Gebäudestatusinformation über die abstrakte Information, dass über mindestens eine Öffnung ein Umgebungsgeräuschs 7 in den Raum eintritt, hinaus eine Unterscheidung zwischen möglichen Öffnungen und deren jeweiligen Öffnungszustand differenziert wird. Leicht erkennbar ist es beispielsweise für die Ansteuerung eines Heizungsaktors 11 infolge eines geöffneten Fensters oder einer geöffneten Tür, durch welche Wärme aus dem Raum austreten kann, unerheblich, exakt welche Tür oder welches Fenster geöffnet ist.

### Bezugszeichenliste:

- 1: Raum
- 2: Gebäudeautomationssystem
- 3: Sensor
- 4: Aktor
- 5: Fenster
- 6: Tür
- 7: Geräuschquelle
- 8: akustischer Sensor
- 9: Server
- 10: Netzwerk
- 11: Heizungsaktor
- 12: Busankoppler

## Patentansprüche

1. Verfahren für die Gebäudeautomation, das die Schritte aufweist:
- Erfassen eines akustischen Signals in einem Raum (1) eines Gebäudes (100), das ein Gebäudeautomationssystem (2) aufweist;
- Abgleichen des erfassten akustischen Signals mit mindestens einem akustischen Referenzsignal, dem eine Gebäudestatusinformation zugeordnet ist;
- Anwenden der Gebäudestatusinformation bei der Erzeugung eines Steuerbefehls zur Ansteuerung eines Aktors (4) des Gebäudeautomationssystems (2), wenn bei dem Abgleichen eine Übereinstimmung zwischen dem erfassten akustischen Signal und dem der Gebäudestatusinformation zugeordneten akustischen Referenzsignal erkannt worden ist,
**dadurch gekennzeichnet, dass** das Erfassen eines akustischen Signals das Erfassen eines Umgebungsgeräuschs aufweist, das ein charakteristisches Verkehrsgeräusch oder Naturgeräusch ist, welches von einer Geräuschquelle (7) außerhalb des Gebäudes (100) erzeugt wird, wobei infolge des Erfassens des Umgebungsgeräuschs aus der Gebäudestatusinformation, die dem Referenzsignal zugeordnet ist, das mit dem erfassten akustischen Signal übereinstimmt, auf ein geöffnetes Fenster (5) oder eine geöffnete Tür (6) des Raums (1) geschlossen wird,
wobei der Aktor (4) ein Heizungsaktor ist, welcher bei Feststellung eines geöffneten Fensters oder einer geöffneten Tür (6) derart angesteuert wird, dass der Heizungsaktor ein dem Raum (1) zugeordnetes Heizungsventil schließt oder geschlossen hält.

2. Verfahren nach Anspruch 1, bei dem das akustische Signal von außerhalb des Raums (1) durch eine Öffnung in dem Raum (1), beispielsweise durch eine Fensteröffnung oder eine Türöffnung, in den Raum (1) eintritt.

3. Verfahren nach einem der vorangegangenen Ansprüche, bei dem das Erfassen eines akustischen Signals das Erfassen einer Signalamplitude des akustischen Signals aufweist, wobei das Abgleichen nur dann durchgeführt wird, wenn die erfasste Signalamplitude eine Schwellamplitude oder einen Mindestgradienten übersteigt, oder wenn eine ansteigende Flanke der Signalamplitude eine Mindeststeigung übersteigt.

4. Verfahren nach einem der vorangegangen Ansprüche, bei dem das akustische Signal von einem akustischen Sensor (8), beispielsweise von einem Mikrofon, erfasst wird, der sich innerhalb des Raums (1) befindet, wobei der akustische Sensor (8) vorzugsweise an der Decke des Raums (1) oder an einer Wand des Raums (1) angeordnet ist.

5. Verfahren nach einem der vorangegangen Ansprüche, bei dem das erfasste akustische Signal für das Abgleichen über ein IP-Protokoll an einen zentralen Server (9) des Gebäudeautomationssystems (2) oder an einen externen Server (9), der außerhalb des Gebäudes (100) angeordnet ist, übertragen wird, wobei das abgleichen auf dem Server (9) durchgeführt wird, wobei vorzugsweise das Erzeugen des Steuerbefehls auf demselben Server (9) durchgeführt wird, wobei der Steuerbefehle, wenn er auf einem externen Server (9) erzeugt wird, über das IP-Protokoll an das Gebäude (100) übertragen wird.

6. Verfahren nach einem der vorangehenden Ansprüche, das weiterhin das Ansteuern eines Fensteraktors aufweist, wenn eine erfasste Signalamplitude des akustischen Signals eine Schwellamplitude übersteigt, sodass ein von dem Fensteraktor angetriebenes Fenster (5) von einer Offenstellung in eine Schließstellung überführt wird.

7. Verfahren nach einem der vorangegangenen Ansprüche, bei dem das Erfassen eines akustischen Signals das Erfassen eines Störsignals mit einem unspezifischen Frequenzspektrum aufweist, zu dem kein übereinstimmendes Referenzsignal für das Abgleichen existiert, wobei bei dem Überschreiten einer Schwellamplitude des Störsignals ein Tür- oder Fensteraktor des Gebäudeautomationssystems (2) dazu angesteuert wird, mindestens eine Tür (6) und/oder mindestens ein Fenster (5) des Gebäudeautomationssystems (2) zu schließen.

8. Verfahren nach Anspruch 7, bei dem nach dem Schließen verifiziert wird, ob eine Signalamplitude des Störsignals die Schwellamplitude unterschreitet oder zumindest geringer als vor dem Schließen geworden ist, wobei
a. in dem Fall, dass die Signalamplitude des Störsignals die Schwellamplitude unterschreitet, keine weitere Ansteuerung des Tür- oder Fensteraktors erfolgt und das mindestens eine Fenster (5) oder die mindestens eine Tür (6) geschlossen gehalten wird;
b. in dem Fall, dass die Signalamplitude des Störsignals die Schwellamplitude nicht unterschreitet, jedoch geringer geworden ist, mindestens ein weiterer Tür- oder Fensteraktor des Gebäudeautomationssystems (2) dazu angesteuert wird, sukzessive mindestens eine weitere Tür (6) und/oder mindestens ein weiteres Fenster (5) des Gebäudeautomationssystems (2) zu schließen, bis die Signalamplitude des Störsignals die Schwellamplitude unterschreitet;
c. in dem Fall, dass die Signalamplitude des Störsignals nach dem Schließen nicht oder nicht wesentlich geringer als vor dem Schließen ist, der für das Schließen angesteuerte Aktor (4) angesteuert wird, die mindestens eine Tür (6) und/oder das mindestens eine Fenster (5) des Gebäudeautomationssystems (2) wieder zu öffnen.

9. Gebäude mit mindestens einem Raum (1) und einem Gebäudeautomationssystem (2), das einen akustischen Sensor (8) in dem Raum (1), etwa ein Mikrofon, und eine Vielzahl Aktoren (4) und/oder Sensoren (3, 8) in dem Raum (1) aufweist, die über ein Gebäudenetzwerk (10) kommunikativ miteinander verbunden sind, wobei der akustische Sensor (8) dazu eingerichtet ist, ein akustisches Signal in dem Raum (1) zu erfassen, wobei das Gebäudeautomationssystem (2) dazu eingerichtet ist, das akustische Signal mit mindestens einem akustischen Referenzsignal abzugleichen, dem eine Gebäudestatusinformation zugeordnet ist, und wobei das Gebäudeautomationssystem (2) weiterhin dazu eingerichtet ist, die Gebäudestatusinformation bei der Erzeugung eines Steuerbefehls zur Ansteuerung eines Aktors (4) des Gebäudeautomationssystems (2) anzuwenden, wenn eine Übereinstimmung zwischen dem erfassten akustischen Signal und dem der Gebäudestatusinformation zugeordneten akustischen Referenzsignal vorliegt, **dadurch gekennzeichnet, dass** das Erfassen eines akustischen Signals das Erfassen eines Umgebungsgeräuschs aufweist, das ein charakteristisches Verkehrsgeräusch oder Naturgeräusch ist, welches von einer Geräuschquelle (7) außerhalb des Gebäudes (100) erzeugt wird, wobei das Gebäudeautomationssystem (2) dazu eingerichtet ist, infolge des Erfassens des Umgebungsgeräuschs aus der Gebäudestatusinformation, die dem Referenzsignal zugeordnet ist, das mit dem erfassten akustischen Signal übereinstimmt, auf ein geöffnetes Fenster (5) oder eine geöffnete Tür (6) des Raums (1) zu schließen,
wobei der Aktor (4) ein Heizungsaktor ist, welcher bei Feststellung eines geöffneten Fensters oder einer geöffneten Tür (6) derart angesteuert ist, dass durch den Heizungsaktor das Schließen eines dem Raum (1) zugeordneten Heizungsventil oder das Verbleiben in einer Schließposition bewirkt ist.

## Claims

1. A method for building automation, comprising the steps:
- Detecting an acoustic signal in a room (1) of a building (100) having a building automation system (2);
- Matching the detected acoustic signal with at least one acoustic reference signal to which building status information is assigned;
- Applying the building status information when generating a control command for actuating an actuator (4) of the building automation system (2) if a match between the detected acoustic signal and the acoustic reference signal assigned to the building status information has been detected during the matching process,
**characterized in that** the detection of an acoustic signal comprises the detection of an ambient noise which is a characteristic traffic noise or natural noise generated by a noise source (7) outside the building (100), wherein as a result of the detection of the ambient noise, an open window (5) or an open door (6) of the room (1) is inferred from the building status information associated with the reference signal which coincides with the detected acoustic signal,
wherein the actuator (4) is a heating actuator which, when an open window or an open door (6) is detected, is controlled in such a way that the heating actuator closes or keeps closed a heating valve associated with the room (1).

2. The method according to claim 1, wherein the acoustic signal enters the room (1) from outside the room (1) through an opening in the room (1), for example through a window opening or a door opening.

3. The method of any one of the preceding claims, wherein detecting an acoustic signal comprises detecting a signal amplitude of the acoustic signal, wherein the matching is performed only when the detected signal amplitude exceeds a threshold amplitude or a minimum gradient, or when a rising edge of the signal amplitude exceeds a minimum gradient.

4. The method according to any one of the preceding claims, in which the acoustic signal is detected by an acoustic sensor (8), for example by a microphone, which is located inside the room (1), the acoustic sensor (8) preferably being arranged on the ceiling of the room (1) or on a wall of the room (1).

5. The method according to any one of the preceding claims, wherein the detected acoustic signal for the matching is transmitted via an IP protocol to a central server (9) of the building automation system (2) or to an external server (9) located outside the building (100), wherein said matching is performed on said server (9), wherein preferably the generation of said control command is performed on the same server (9), wherein said control command, when generated on an external server (9), is transmitted to said building (100) via said IP protocol.

6. The method according to any one of the preceding claims, further comprising driving a window actuator when a detected signal amplitude of the acoustic signal exceeds a threshold amplitude so that a window (5) driven by the window actuator is transferred from an open position to a closed position.

7. The method according to one of the preceding claims, in which the detection of an acoustic signal comprises the detection of a disturbance signal with a nonspecific frequency spectrum for which no matching reference signal exists for the matching, wherein, when a threshold amplitude of the disturbance signal is exceeded, a door or window actuator of the building automation system (2) is triggered to close at least one door (6) and/or at least one window (5) of the building automation system (2).

8. The method of claim 7, wherein after closure, it is verified whether a signal amplitude of the interfering signal falls below the threshold amplitude or at least has become lower than before closure, wherein
a. in the event that the signal amplitude of the disturbance signal falls below the threshold amplitude, no further activation of the door or window actuator takes place and the at least one window (5) or the at least one door (6) is kept closed;
b. in the event that the signal amplitude of the interference signal does not fall below the threshold amplitude but has become lower, at least one further door or window actuator of the building automation system (2) is activated to successively close at least one further door (6) and/or at least one further window (5) of the building automation system (2) until the signal amplitude of the interference signal falls below the threshold amplitude;
c. in the case that the signal amplitude of the disturbance signal after closing is not or not substantially smaller than before closing, the actuator (4) activated for closing is activated to open the at least one door (6) and/or the at least one window (5) of the building automation system (2) again.

9. A building with at least one room (1) and a building automation system (2), which has an acoustic sensor (8) in the room (1), such as a microphone, and a plurality of actuators (4) and/or sensors (3, 8) in the room (1), which are communicatively connected to one another via a building network (10), wherein the acoustic sensor (8) is adapted to detect an acoustic signal in the room (1), wherein the building automation system (2) is adapted to match the acoustic signal with at least one acoustic reference signal to which building status information is assigned, and wherein the building automation system (2) is further adapted to apply the building status information in generating a control command for controlling an actuator (4) of the building automation system (2), when there is a match between the detected acoustic signal and the reference acoustic signal associated with the building status information, **characterized in that** the detection of an acoustic signal comprises detecting an ambient noise, which is a characteristic traffic noise or natural noise generated by a noise source (7) outside the building (100), wherein the building automation system (2) is adapted to infer an open window (5) or an open door (6) of the room (1) as a result of detecting the ambient noise from the building status information associated with the reference signal coinciding with the detected acoustic signal, wherein the actuator (4) is a heating actuator which, when an open window or an open door (6) is detected, is controlled in such a way that the heating actuator causes a heating valve associated with the room (1) to close or to remain in a closed position.

## Revendications

1. Procédé de domotique qui comprend les étapes suivantes :
- détection d'un signal acoustique dans une pièce (1) d'un bâtiment (100), qui comprend un système de domotique (2) ;
- comparaison du signal acoustique détecté avec au moins un signal acoustique de référence, auquel correspond une information d'état de bâtiment ;
- utilisation de l'information d'état de bâtiment lors de la production d'une instruction de commande pour le contrôle d'un actionneur (4) du système de domotique (2) lorsqu'une correspondance entre le signal acoustique détecté et le signal acoustique de référence correspondant à l'information d'état de bâtiment a été détectée,
**caractérisé en ce que** la détection d'un signal acoustique comprend la détection d'un bruit environnant qui est un bruit de trafic ou un bruit naturel caractéristique produit par une source de bruit (7) à l'extérieur du bâtiment (100), dans lequel, à la suite de la détection du bruit environnant à partir de l'information d'état de bâtiment, qui correspond au signal de référence, qui coïncide avec le signal acoustique détecté, on en déduit une fenêtre ouverte (5) ou une porte ouverte (6),
dans lequel l'actionneur (4) est un actionneur de chauffage qui, lors de la détection d'une fenêtre ouverte ou d'une porte ouverte (6), est contrôlé de façon à ce que l'actionneur de chauffage ferme ou maintient ouverte une vanne de chauffage correspondant à la pièce (1).

2. Procédé selon la revendication 1, dans lequel le signal acoustique entre de l'extérieur de la pièce (1) à travers une ouverture dans la pièce (1), par exemple à travers une ouverture de fenêtre ou une ouverture de porte, dans la pièce (1).

3. Procédé selon l'une des revendications précédentes, dans lequel la détection d'un signal acoustique comprend la détection d'une amplitude de signal du signal acoustique, dans lequel la comparaison n'est effectuée que lorsque l'amplitude de signal détectée dépasse une amplitude seuil ou un gradient minimal ou lorsqu'un flanc ascendant de l'amplitude de signal dépasse une pente minimale.

4. Procédé selon l'une des revendications précédentes, dans lequel le signal acoustique est détecté par un capteur acoustique (8), par exemple par un microphone, qui se trouve à l'intérieur de la pièce (1), dans lequel le capteur acoustique (8) est disposé de préférence au plafond de la pièce (1) ou sur un mur de la pièce (1).

5. Procédé selon l'une des revendications précédentes, dans lequel le signal acoustique détecté est transmis, pour la comparaison, par l'intermédiaire d'un protocole IP, à un serveur central (9) du système de domotique (2) ou à un serveur externe (9) qui est disposé à l'extérieur du bâtiment (100), dans lequel la comparaison est effectuée sur le serveur (9), dans lequel, de préférence, la génération de l'instruction de commande est effectuée sur le même serveur (9), dans lequel l'instruction de commande est transmise par l'intermédiaire du protocole IP au bâtiment (100) lorsqu'elle est générée sur un serveur externe (9).

6. Procédé selon l'une des revendications précédentes, qui comprend en outre le contrôle d'un actionneur de fenêtre lorsqu'une amplitude de signal détectée du signal acoustique dépasse une amplitude seuil, de façon à ce qu'une fenêtre (5) entraînée par l'actionneur de fenêtre passe d'une position ouverte à une position fermée.

7. Procédé selon l'une des revendications précédentes, dans lequel la détection d'un signal acoustique comprend la détection d'un signal parasite avec un spectre de fréquence non spécifique, pour lequel il n'existe aucun signal de référence correspondant pour la comparaison, dans lequel, lors du dépassement d'une amplitude seuil du signal parasite, un actionneur de porte ou de fenêtre du système de domotique (2) est contrôlé afin de fermer au moins une porte (6) et/ou au moins une fenêtre (5) du système de domotique (2).

8. Procédé selon la revendication 7, dans lequel, après la fermeture, il est vérifié si une amplitude de signal du signal parasite tombe en dessous de l'amplitude seuil ou est devenue au moins inférieure à l'amplitude avant la fermeture, dans lequel
a. dans le cas où l'amplitude de signal du signal parasite tombe en dessous de l'amplitude seuil, aucun autre contrôle de l'actionneur de porte ou de fenêtre n'a lieu et l'au moins une fenêtre (5) ou l'au moins une porte (6) est maintenue fermée ;
b. dans le cas où l'amplitude de signal du signal parasite ne tombe pas en dessous de l'amplitude seuil, mais a diminué, au moins un autre actionneur de porte ou de fenêtre du système de domotique (2) est contrôlé afin de fermer successivement au moins une autre porte (6) et/ou au moins une autre fenêtre (5) du système de domotique (2) jusqu'à ce que l'amplitude de signal du signal parasite tombe en dessous de l'amplitude seuil ;
c. dans le cas où l'amplitude de signal du signal parasite après la fermeture n'est pas inférieure ou pas beaucoup inférieure à l'amplitude avant la fermeture, l'actionneur (4) est contrôlé pour la fermeture, afin de rouvrir au moins une porte (6) et/ou au moins une fenêtre (5) du système de domotique (2).

9. Bâtiment avec au moins une pièce (1) et un système de domotique (2), qui comprend un capteur acoustique (8) dans la pièce (1), par exemple un microphone, et une pluralité d'actionneurs (4) et/ou de capteurs (3, 8) dans la pièce (1), qui sont reliés entre eux de manière communicante par l'intermédiaire d'un réseau de bâtiment (10), dans lequel le capteur acoustique (8) est conçu pour détecter un signal acoustique dans la pièce (1), dans lequel le système de domotique (2) est conçu pour comparer le signal acoustique avec au moins un signal acoustique de référence auquel correspond une information d'état de bâtiment et dans lequel le système de domotique (2) est en outre conçu pour utiliser l'information d'état de bâtiment lors de la génération d'une instruction de commande pour le contrôle d'un actionneur (4) du système de domotique (2), lorsqu'il existe une correspondance entre le signal acoustique détecté et le signal acoustique de référence correspondant à l'information d'état de bâtiment, **caractérisé en ce que** la détection d'un signal acoustique comprend la détection d'un bruit environnant qui est un bruit de trafic ou un bruit naturel caractéristique généré par une source de bruit (7) à l'extérieur du bâtiment (100), dans lequel le système de domotique (2) est conçu, à la suite de la détection du bruit environnant à partir de l'information d'état de bâtiment, qui correspond au signal de référence, qui coïncide avec le signal acoustique détecté, pour en déduire une fenêtre ouverte (5) ou une porte ouverte (6) de la pièce (1),
dans lequel l'actionneur (4) est un actionneur de chauffage qui, lors de la détection d'une fenêtre ouverte ou d'une porte ouverte (6), est contrôlé de façon à ce que, l'actionneur de chauffage provoque la fermeture d'une vanne de chauffage correspondant à la pièce (1) ou le maintien dans une position de fermeture.
